# EUROPÄISCHE PATENTSCHRIFT

(11) **EP 2 802 742 B1**
(45) Veröffentlichungstag und Bekanntmachung des Hinweises auf die Patenterteilung: **18.06.2025**
(21) Anmeldenummer: 12816262.5
(22) Anmeldetag: 18.12.2012
(51) Int. Cl.: F01D 5/00, F01D 5/28, C23C 4/00, C23C 28/00

(54) **VERFAHREN ZUR HERSTELLUNG UND WIEDERHERSTELLUNG VON KERAMISCHEN WÄRMEDÄMMSCHICHTEN IN GASTURBINEN**
METHOD FOR PRODUCING AND RESTORING OF CERAMIC THERMAL BARRIER COATINGS IN GAS TURBINES
PROCÉDÉ DE PRODUCTION ET REPRODUCTION DE RÊVETEMENTS DE BARRIÈRES THERMIQUES EN CÉRAMIQUE DANS DES TURBINES À GAZ

(30) Priorität: 28.03.2012 EP 12161760
(43) Veröffentlichungstag der Anmeldung: 19.11.2014
(60) Teilanmeldung: 24172355.0
(73) Patentinhaber: Siemens Energy Global GmbH & Co. KG, 81739 München (DE)
(72) Erfinder: STAMM, Werner, 45481 Mülheim an der Ruhr (DE); BULLINGER, Patrick, 90482 Nürnberg (DE); GROSSHÄUSER, Martin, 91052 Erlangen (DE); PAHL, Andreas, 40589 Düsseldorf (DE); REIERMANN, Dietmar, 14476 Potsdam (DE); RINDLER, Michael, 15566 Schöneiche (DE)
(86) Internationale Anmeldenummer: PCT/EP2012/075888
(87) Internationale Veröffentlichungsnummer: WO 2013/143631

(56) Entgegenhaltungen:
- EP-A1- 1 247 941
- EP-A1- 1 806 430
- EP-A1- 1 967 312
- EP-A1- 2 407 579
- WO-A1-2007/112783
- WO-A1-96/12049
- WO-A1-98/26110
- WO-A1-99/23278
- DE-C1- 4 302 167
- US-A- 4 299 865
- US-A1- 2004 033 884
- US-A1- 2007 274 837
- US-A1- 2008 145 643
- US-A1- 2009 123 722
- US-A1- 2009 324 841
- US-A1- 2012 003 460
- US-A1- 2012 027 931

## Beschreibung

Die Erfindung betrifft ein Verfahren zur Herstellung von Gasturbinen, die flexibel ausgelegt werden.

Gasturbinen können bei der Stromerzeugung im Grundlastbetrieb oder insbesondere im Spitzenlastbetrieb betrieben werden.

Die Anforderungen an die jeweiligen Bedingungen sind unterschiedlich.

Eine optimierte Konfiguration der Gasturbine, die beide Anforderungen erfüllt, würde immer einen Kompromiss darstellen. EP 1806430 A1 lehrt, für einen erneuten Einsatz auf entschichtete Turbinenschaufeln erneut eine neue einlagige keramische Wärmeschutzschicht mit einer Porosität von 22-28% aufzubringen.

US 2009/0324841 A1 lehrt, für einen erneuten Einsatz auf entschichtete Turbinenschaufeln erneut eine neue einlagige oder mehrlagige keramische Wärmeschutzschicht aufzubringen.

WO 2007/112713 A1 lehrt zwei- oder drei-lagige Schichten mit einer schrittweise ansteigenden Porosität zu versehen, z.B. innen 9-11%, außen 20-27% und bei Nutzung einer dritten Schicht entsprechend dazwischen.

Die EP 2 407 579 A1 lehrt für einen erneuten Einsatz auf entschichtete Turbinenschaufeln eine neue keramische Wärmeschutzschicht aufzubringen. Es wird eine zweilagige Wärmeschutzschicht offenbart, die mittels einer direkt auf dem Substrat aufgetragenen Haftschicht fixiert wird. Die Porosität der inneren Lage ist 10-18% und der äußeren Lage ist >21%.

Die US 2002/003460 A1 offenbart lehrt ein spezielles Schichtlagen-System für Turbinenschaufeln mit zwei unterschiedlichen porösen keramischen (ZrO2) Schutzschichten.

Es ist daher Aufgabe der Erfindung dieses Problem zu lösen.

Die Aufgabe wird gelöst durch ein Verfahren zur Herstellung einer zweiten Gasturbine gemäß Anspruch 1.

In den Unteransprüchen sind weitere vorteilhafte Maßnahmen aufgelistet, die miteinander kombiniert werden können, um weitere Vorteile zu erzielen.

Es zeigen:
- Figur 1 - 3: Ausführungsbeispiele,
- Figur 4: eine Porenverteilung keramischer Schicht,
- Figur 5: eine Turbinenschaufel und
- Figur 6: eine Gasturbine.

Die Beschreibung stellt Ausführungsbeispiele der Erfindung dar sowie Ausführungsbeispiele, die nicht unter die Ansprüche fallen.

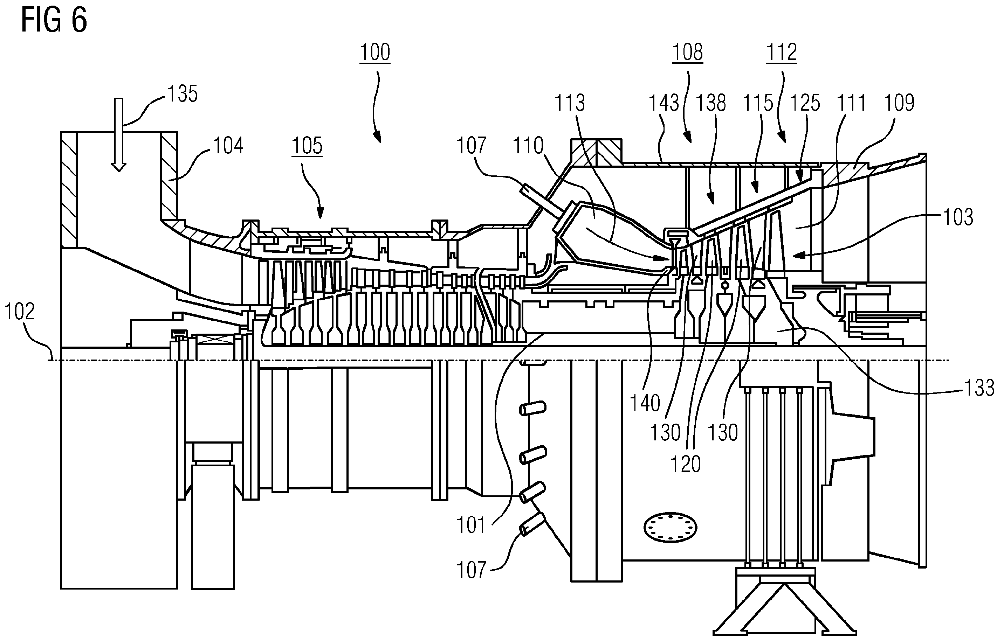

Ein Intervall der Wartung von Gasturbinen 100 (Fig. 6) wird bestimmt durch Erfassung der Betriebsstunden und Starts, die abhängig von der Betriebsweise und bestimmten Faktoren sind. Die Wartung ist jeweils nach Erreichen des Stunden- oder Startlimits durchzuführen.

Ist nun je nach Einsatzgebiet der Gasturbine eine Wartung notwendig oder verlangt der Einsatz vorab eine Überholung bzw. einen anderen Einsatz, so wird die Konfiguration der Gasturbine 100 geändert.

### Begriffsdefinitionen:

Erste Gasturbine hat 1. Turbinenschaufel mit 1. Wärmedämmschicht.

Zweite Gasturbine hat Turbinenschaufeln mit keramischen Wärmedämmschichten
a) bei denen die 1. Turbinenschaufeln (=zweite Turbinenschaufel) und/oder
b) neue unverbrauchte Turbinenschaufeln (= neue zweite Turbinenschaufeln) verwendet werden
   und jeweils eine 2. Wärmedämmschicht deutlich unterscheidbar von der 1. Wärmedämmschicht aufweisen.

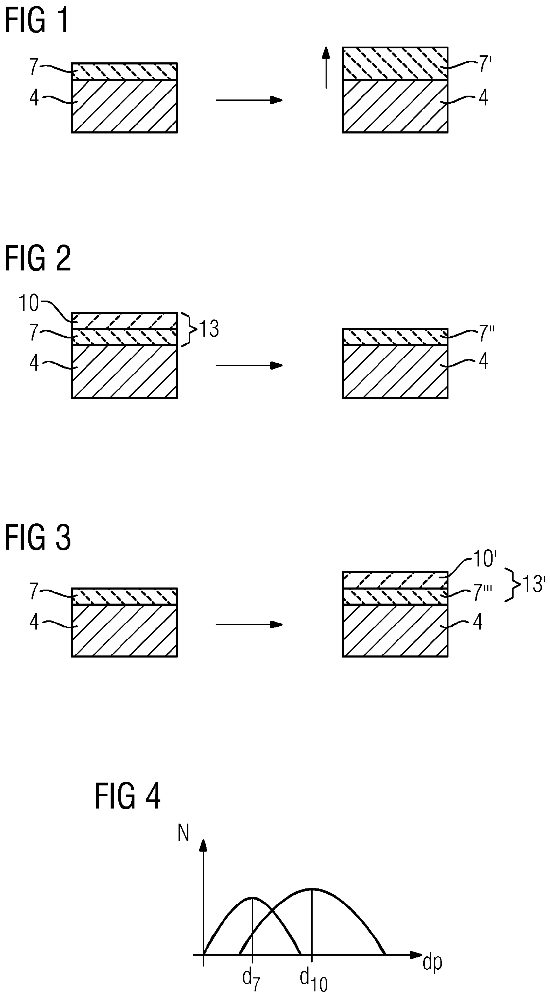

War vorher in dieser ersten Gasturbine eine einlagige Wärmedämmschicht wie oben beschrieben im Betrieb vorhanden, so wird für den erneuten Einsatz im Grundlastbetrieb eine zweilagige und/oder zweischichtige (Fig. 3), eine dickere (Fig. 1) oder porösere keramische Wärmedämmschicht für die Turbinenschaufeln 120, 130 verwendet.

Die Turbinenschaufeln für die zweite Gasturbine können im Ursprung (dasselbe Substrat) die ersten Turbinenschaufeln der ersten Gasturbine oder anderer Gasturbinen sein, die bereits im Einsatz waren, entsprechend aufgearbeitet wurden (Refurbishment) und durch eine Wiederbeschichtung zweite Turbinenschaufeln ergeben oder neue zweite Turbinenschaufeln sein, bei denen neu hergestellte (neu gegossene), noch nicht verwendete Turbinenschaufeln anders als die ersten Turbinenschaufeln der ersten Gasturbine beschichtet werden.

Ebenso ist es möglich, wenn die Gasturbine 100 im Grundlastbetrieb eine zweilagige keramische Wärmedämmschicht auf den Turbinenschaufeln 120, 130 aufgewiesen hat, eine einlagige TBC aufzubringen, so dass sie dann im Spitzenlastbetrieb (daily starter) eingesetzt werden kann (Fig. 2).

Für den Spitzenlastbetrieb wird vorzugsweise nur eine einlagige keramische Schicht mit einer einheitlichen Porosität verwendet. Für den Spitzenlastbetrieb weist die keramische Wärmedämmschicht auf den Turbinenschaufeln 120, 130 vorzugsweise eine hohe Porosität von 18% ± 4% auf.

Im Grundlastbetrieb (base loader) wird jedoch eine zweilagige Wärmedämmschicht 13 eingesetzt, oder gemäß der Erfindung neue zweite keramische Wärmedämmschichten 7‴, 10' (Fig. 3).

Als Ausgangspulver für die keramischen Schichten 7', 7", 7‴, 10', 13' wird vorzugsweise agglomeriertes, gesintertes Pulver verwendet.

Jede keramische gespritzte Schicht wird in Beschichtungslagen aufgebracht. Zweilagigkeit bedeutet aber, dass sich eine zweite Lage durch Porosität und/oder Mikrostruktur und/oder chemische Zusammensetzung von einer ersten, untenliegenden Lage unterscheidet.

Als untere Lage wird vorzugsweise eine keramische Lage 7 mit einer Porosität von 12% ± 4% verwendet, die vorzugsweise eine Schichtdicke von 75µm bis 150µm aufweist.

Darüber wird als äußere keramische Lage 10 eine Porosität mit 18% ± 4% gespritzt bzw. ist vorhanden.

Der Unterschied in der Porosität beträgt jedoch mindestens 2%, insbesondere mindestens 4%. Schwankungen in der Porosität bei der Herstellung sind bekannt. Innerhalb einer Charge, d.h. eines Schaufelsatzes, sind keine Schwankungen zu verzeichnen.

Als untere Lage wird ebenso vorzugsweise eine keramische Lage 7 mit einer Porosität von 18% ± 4% verwendet, die vorzugsweise eine Schichtdicke von 75µm bis 150µm aufweist. Darüber wird als äußere keramische Lage 10 eine Porosität mit 25% ± 4% gespritzt bzw. ist vorhanden.

Der Unterschied in der Porosität beträgt jedoch mindestens 2%, insbesondere mindestens 4%. Schwankungen in der Porosität bei der Herstellung sind bekannt. Innerhalb einer Charge, d.h. eines Schaufelsatzes, sind keine Schwankungen zu verzeichnen.

Um Porositäten in keramischen Schichten oder keramischen Lagen (Figuren 1 - 3) zu erzeugen, können beim Spritzen grobe Körner verwendet werden und Verwendung von Polymeren oder kleinere Körner mit Polymer verwendet werden, wobei grob einen mindestens 20% größeren mittleren Teilchendurchmesser bedeutet.

Eine zweilagige keramische Schicht 7, 10 kann mit verschiedenen Spritzverfahren hergestellt werden: die untere Lage 7 wird ohne Polymer und die obere Lage 10 wird mit Polymer verspritzt.

Dadurch ergeben sich in der oberen Lage 10 größere Poren, d.h. der mittlere Porendurchmesser d₁₀ steigt gegenüber dem mittleren Porendurchmesser d₇ der unteren Lage 7 (Fig. 4) an. Dies ist nicht zwangsläufig so. Eine höhere Porosität wird oft nur durch eine höhere Anzahl Poren der gleichen Porengröße erzielt.

Vorzugsweise wird das gleiche Pulver dabei verwendet, also auch eine gleiche Korngrößenverteilung.

Zirkonoxid (ZrO₂) für die keramischen Lagen der Wärmedämmschichten weist vorzugsweise einen monoklinen Anteil von ≤ 3%, insbesondere ≤ 1,5% aufweist. Dementsprechende Anteile weist dann eine keramische Lage oder Schicht 7, 7', 10, 13 (Figuren 1 - 3) auf der Turbinenschaufel 120, 130 auf.

Der Minimumanteil der monoklinen Phase beträgt mindestens 1%, insbesondere 0,5%, um die Kosten des Pulvers nicht zu stark zu erhöhen.

Durch die Veränderung der Konfiguration der ersten Wärmedämmschicht 7', 7", 13' wird quasi eine andere, zweite Gasturbine hergestellt, die optimiert ist auf ihr Einsatzgebiet.

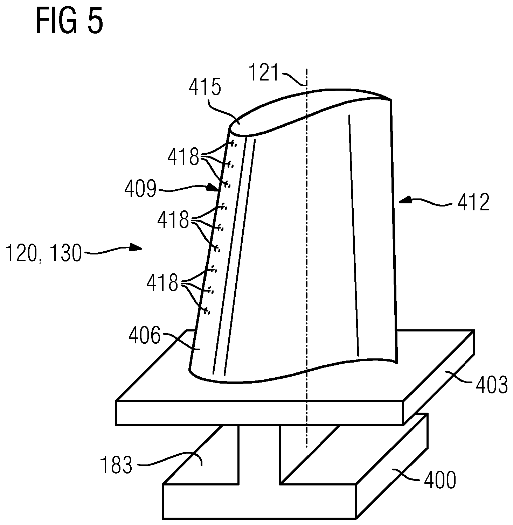

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zur Herstellung einer zweiten Gasturbine, bei dem ausgehend von einer ersten Gasturbine von ersten Turbinenschaufeln (120, 130) der ersten Gasturbine eine erste keramische Wärmedämmschicht (7) entfernt wird und neue zweite keramische Wärmedämmschichten (7‴, 10') zur Herstellung zweiter Turbinenschaufeln auf die entschichteten ersten Turbinenschaufeln (120, 130) aufgebracht werden, **dadurch gekennzeichnet, dass** die neuen zweiten keramischen Wärmedämmschichten (7‴, 10') sich von der ersten keramischen Wärmedämmschicht (7) deutlich unterscheiden, wobei Unterscheidung bedeutet, dass die Lagigkeit unterschiedlich ist durch die Ein- oder Zweilagigkeit der keramischen Wärmedämmschichten (7‴, 10'), und wobei die zweiten Turbinenschaufeln in die zweite Gasturbine eingebaut werden.

2. Verfahren nach Anspruch 1, bei dem eine einlagige Wärmedämmschicht (7) von den ersten Turbinenschaufeln entfernt wird.

3. Verfahren nach Anspruch 1 oder 2, bei dem die Porosität der zweiten keramischen Wärmedämmschichten (7‴, 10') der zweiten Turbinenschaufeln gegenüber der Porosität der Wärmedämmschicht der ersten Turbinenschaufeln erhöht wird.

4. Verfahren nach Anspruch 1 oder 2, bei dem die Porosität der zweiten keramischen Wärmedämmschichten (7‴, 10') der zweiten Turbinenschaufeln gegenüber der Porosität der Wärmedämmschicht der ersten Turbinenschaufeln erniedrigt wird.

5. Verfahren nach einem oder mehreren der Ansprüche 1 bis 3, bei dem eine dünnere keramische Wärmedämmschicht (7) als erste keramische Wärmedämmschicht ersetzt wird durch eine insgesamt dickere keramische Wärmedämmschicht (13') gebildet aus den zweiten keramischen Wärmedämmschichten (7‴, 10') der zweiten Turbinenschaufeln, wobei der Unterschied in der Dicke mindestens +50µm beträgt.

6. Verfahren nach einem oder mehreren der Ansprüche 1 bis 4, bei dem eine dickere keramische Wärmedämmschicht als erste keramische Wärmedämmschicht ersetzt wird durch eine insgesamt dünnere keramische Wärmedämmschicht (13') gebildet aus den zweiten keramischen Wärmedämmschichten (7‴, 10') der zweiten Turbinenschaufeln, wobei der Unterschied in der Dicke mindestens -50µm beträgt.

7. Verfahren nach einem oder mehreren der Ansprüche 2 bis 6, bei dem die zweiten keramischen Wärmedämmschichten mit einer untersten keramischen Schicht (7‴) mit einer Porosität von 12% ± 4% und mit einer äußeren keramischen Schicht (10') mit einer Porosität von 18% ± 4% erzeugt werden, wobei der absolute Unterschied in der Porosität der keramischen Schichten (7‴, 10') mindestens 2% beträgt, insbesondere maximal 4% beträgt.

8. Verfahren nach einem oder mehreren der Ansprüche 2 bis 6, bei dem die zweiten keramischen Wärmedämmschichten mit einer untersten keramischen Schicht (7‴) mit einer Porosität von 18% ± 4% und mit einer äußeren keramischen Schicht (10') mit einer gleichen Porosität von 18% ± 4% erzeugt werden.

9. Verfahren nach einem oder mehreren der Ansprüche 2 bis 6, bei dem die zweiten keramischen Wärmedämmschichten mit einer untersten keramischen Schicht (7‴) mit einer Porosität von 18% ± 4% und mit einer äußeren keramischen Schicht (10') mit einer Porosität von 25% ± 4% erzeugt werden, wobei der absolute Unterschied in der Porosität der keramischen Schichten (7‴, 10') mindestens 2% beträgt, insbesondere maximal 4% beträgt.

10. Verfahren nach einem oder mehreren der Ansprüche 2 bis 9, bei dem die untere Schicht (7‴) der zweiten keramischen Wärmedämmschichten dünner, insbesondere mindestens 20% dünner ausgeführt ist als die obere Schicht (10'), bei dem die untere Schicht (7‴) der zweiten keramischen Wärmedämmschichten eine Dicke von 75µm bis 150µm aufweist, wobei die Gesamtschichtdicke der zweiten keramischen Wärmedämmschichten 500 µm bis 800µm beträgt.

11. Verfahren nach einem oder mehreren der Ansprüche 2 bis 10, bei dem für die untere keramische Schicht (7‴) teilstabilisiertes Zirkonoxid und für die obere keramische Schicht (10') teilstabilisiertes Zirkonoxid verwendet wird.

12. Verfahren nach einem oder mehreren der vorherigen Ansprüche, bei dem Zirkonoxid für die keramischen Wärmedämmschichten (7‴, 10') verwendet wird, und der monokline Anteil des zu verspritzenden Pulvers unter 3% liegt, und mindestens 0,3% beträgt.

13. Verfahren nach einem oder beiden der Ansprüche 11 oder 12, bei dem der tetragonale Anteil in Zirkonoxid den größten Anteil aufweist von mindestens 60%.

14. Verfahren nach Anspruch 12 oder 13, bei dem durch eine Wärmebehandlung der monokline Anteil des Zirkonoxids unter die Nachweisgrenze reduziert wird.

15. Verfahren nach einem oder mehreren der Ansprüche 2 bis 14, bei dem die untere Schicht (7‴) ohne Polymer verspritzt wird und die obere Schicht (10') mit Polymer verspritzt wird.

16. Verfahren nach einem oder mehreren der Ansprüche 2 bis 15, bei dem der mittlere Porendurchmesser (d₁₀) der oberen keramischen Schicht (10') größer erzeugt wird als der mittlere Porendurchmesser (d₇) der unteren keramischen Schicht (7‴), insbesondere um mindestens 20µm.

17. Verfahren nach einem oder mehreren der Ansprüche 2 bis 16, bei dem für die keramischen Schichten (7‴, 10') das gleiche Pulver mit gleicher Zusammensetzung und gleichen Korngrößenverteilung verwendet wird.

18. Verfahren nach Anspruch 2 bis 16, bei dem für die untere keramische Schicht (7‴) ein anderes Material verwendet wird als für die obere keramische Schicht (10'), insbesondere Zirkonoxid für die untere Schicht (7‴), ganz insbesondere ein Pyrochlor für die obere Schicht (10').

## Claims

1. Process
for producing a second gas turbine,
in which, proceeding from a first gas turbine, a first ceramic thermal barrier coating (7) is removed from first turbine blades or vanes (120, 130) of the first gas turbine and new, second ceramic thermal barrier coatings (7‴, 10') are applied to the first turbine blades or vanes (120, 130) from which the coating has been removed to produce second turbine blades or vanes,
**characterized in that** the new, second ceramic thermal barrier coatings (7‴, 10') differ significantly from the first ceramic thermal barrier coating (7),
in which case a difference means
that the layer nature is different
due to the single-layer or two-layer nature of the ceramic thermal barrier coatings (7‴, 10'),
and wherein the second turbine blades or vanes are incorporated in the second gas turbine.

2. Process according to Claim 1, in which a single-layer thermal barrier coating (7) is removed from the first turbine blades or vanes.

3. Process according to Claim 1 or 2, in which the porosity of the second ceramic thermal barrier coatings (7‴, 10') of the second turbine blades or vanes is elevated compared to the porosity of the thermal barrier coating of the first turbine blades or vanes.

4. Process according to Claim 1 or 2, in which the porosity of the second ceramic thermal barrier coatings (7"', 10') of the second turbine blades or vanes is lowered compared to the porosity of the thermal barrier coating of the first turbine blades or vanes.

5. Process according to one or more of Claims 1 to 3, in which a thinner ceramic thermal barrier coating (7) as the first ceramic thermal barrier coating is replaced by an overall thicker ceramic thermal barrier coating (13') formed from the second ceramic thermal barrier coatings (7‴, 10') of the second turbine blades or vanes,
the difference in the thickness being at least +50 µm.

6. Process according to one or more of Claims 1 to 4, in which a thicker ceramic thermal barrier coating as the first ceramic thermal barrier coating is replaced by an overall thinner ceramic thermal barrier coating (13') formed from the second ceramic thermal barrier coatings (7"', 10') of the second turbine blades or vanes,
the difference in the thickness being at least -50 µm.

7. Process according to one or more of Claims 2 to 6, in which the second ceramic thermal barrier coatings are produced with a bottommost ceramic layer (7‴) having a porosity of 12% ± 4% and with an outer ceramic layer (10') having a porosity of 18% ± 4%, the absolute difference in the porosity of the ceramic layers (7‴, 10') being at least 2%, in particular at most 4%.

8. Process according to one or more of Claims 2 to 6, in which the second ceramic thermal barrier coatings are produced with a bottommost ceramic layer (7‴) having a porosity of 18% ± 4% and with an outer ceramic layer (10') having an identical porosity of 18% ± 4%.

9. Process according to one or more of Claims 2 to 6, in which the second ceramic thermal barrier coatings are produced with a bottommost ceramic layer (7‴) having a porosity of 18% ± 4% and with an outer ceramic layer (10') having a porosity of 25% ± 4%, the absolute difference in the porosity of the ceramic layers (7‴, 10') being at least 2%, in particular at most 4%.

10. Process according to one or more of Claims 2 to 9, in which the bottom layer (7‴) of the second ceramic thermal barrier coatings is designed to be thinner, in particular at least 20% thinner, than the top layer (10'), in which the bottom layer (7‴) of the second ceramic thermal barrier coatings has a thickness of 75 µm to 150 µm,
the total coating thickness of the second ceramic thermal barrier coatings being 500 µm to 800 µm.

11. Process according to one or more of Claims 2 to 10, in which partially stabilized zirconium oxide is used for the bottom ceramic layer (7‴) and
partially stabilized zirconium oxide is used for the top ceramic layer (10').

12. Process according to one or more of the preceding claims, in which zirconium oxide is used for the ceramic thermal barrier coatings (7‴, 10') ,
and the monoclinic proportion of the powder to be sprayed is less than 3%,
and is at least 0.3%.

13. Process according to one or both of Claims 11 and 12, in which the tetragonal proportion has the greatest proportion of at least 60% in zirconium oxide.

14. Process according to Claim 12 or 13, in which a heat treatment reduces the monoclinic proportion of the zirconium oxide below the detection limit.

15. Process according to one or more of Claims 2 to 14, in which the bottom layer (7‴) is sprayed without polymer and the top layer (10') is sprayed with polymer.

16. Process according to one or more of Claims 2 to 15, in which the mean pore diameter (d₁₀) of the top ceramic layer (10') is produced so as to be greater than the mean pore diameter (d₇) of the bottom ceramic layer (7‴), in particular by at least 20 µm.

17. Process according to one or more of Claims 2 to 16, in which the same powder with the same composition and with the same grain size distribution is used for the ceramic layers (7‴, 10').

18. Process according to Claims 2 to 16, in which a different material is used for the bottom ceramic layer (7‴) than for the top ceramic layer (10'),
in particular zirconium oxide for the bottom layer (7‴), very particularly a pyrochlore for the top layer (10').

## Revendications

1. Procédé de fabrication d'une deuxième turbine à gaz,
dans lequel, à partir d'une première turbine à gaz, on élimine de premières aubes (120, 130) de turbine de la première turbine à gaz, une première couche (7) calorifuge céramique et on dépose de nouvelles deuxièmes couches (7‴, 10') calorifuges céramiques pour la production de deuxièmes aubes de turbine sur les premières aubes (120, 130) de turbine dépourvues de leurs couches,
**caractérisé en ce que** les nouvelles deuxièmes couches (7''', 10') calorifuges céramiques se distinguent nettement de la première couche (7) calorifuge céramique, dans lequel se distinguer signifie
que la stratification est différente par la stratification à une couche ou à deux couches des couches (7‴, 10') calorifuges céramiques,
et dans lequel les deuxièmes aubes de turbine sont montées dans la deuxième turbine à gaz.

2. Procédé suivant la revendication 1,
dans lequel on élimine une couche (7) calorifuge à une seule couche des premières aubes de turbine.

3. Procédé suivant la revendication 1 ou 2,
dans lequel la porosité des deuxièmes couches (7''', 10') calorifuges céramiques des deuxièmes aubes de turbine est plus grande que la porosité de la couche calorifuge des premières aubes de turbine.

4. Procédé suivant la revendication 1 ou 2,
dans lequel la porosité des deuxièmes couches (7''', 10') calorifuges céramiques des deuxièmes aubes de turbine est plus petite que la porosité de la couche calorifuge des premières aubes de turbine.

5. Procédé suivant l'une ou plusieurs des revendications 1 à 3,
dans lequel on remplace une couche (7) calorifuge céramique assez mince, comme première couche calorifuge céramique, par une couche (13') calorifuge céramique dans l'ensemble plus épaisse formée des deuxièmes couches (7‴, 10')calorifuges céramiques des deuxièmes aubes de turbine,
dans lequel la différence d'épaisseur est d'au moins + 50 µm.

6. Procédé suivant l'une ou plusieurs des revendications 1 à 4,
dans lequel on remplace une couche calorifuge céramique plus épaisse, comme première couche calorifuge céramique, par une couche (13') calorifuge céramique dans l'ensemble plus mince formée des deuxièmes couches (7‴, 10') calorifuges céramiques des deuxièmes aubes de turbine,
dans lequel la différence d'épaisseur est d'au moins - 50 µm.

7. Procédé suivant l'une ou plusieurs des revendications 2 à 6,
dans lequel on produit les deuxièmes couches calorifuges céramiques avec une couche (7‴) calorifuge céramique la plus basse d'une porosité de 12 % ± 4 % et avec une couche (10') céramique extérieure d'une porosité de 18 % ± 4 %,
dans lequel la différence absolue de porosité des couches (7‴, 10') céramiques est d'au moins 2 %, en étant en particulier de 4 % au maximum.

8. Procédé suivant l'une ou plusieurs des revendications 2 à 6,
dans lequel on produit les deuxièmes couches calorifuges céramiques avec une couche (7‴) céramique la plus basse d'une porosité de 18 % ± 4 % et
avec une couche (10') céramique extérieure d'une même porosité de 18 % ± 4 %.

9. Procédé suivant l'une ou plusieurs des revendications 2 à 6,
dans lequel on produit les deuxièmes couches calorifuges céramiques avec une couche (7''') céramique la plus basse d'une porosité de 18 % ± 4 % et
avec une couche (10') céramique extérieure d'une porosité de 25 % ± 4 %,
dans lequel la différence absolue de la porosité des couches (7‴, 10') céramiques est d'au moins 2 %, en étant en particulier de 4 % au maximum.

10. Procédé suivant l'une ou plusieurs des revendications 2 à 9,
dans lequel la couche (7''') inférieure des deuxièmes couches calorifuges céramiques est plus mince, en particulier plus mince d'au moins 20 %, que la couche (10') supérieure,
dans lequel la couche (7''') inférieure des deuxièmes couches calorifuges céramiques a une épaisseur de 75 µm à 150 µm, dans lequel l'épaisseur totale des deuxièmes couches calorifuges céramiques va de 500 µm à 800 µm.

11. Procédé suivant l'une ou plusieurs des revendications 2 à 10,
dans lequel on utilise, pour la couche (7‴) céramique inférieure, de l'oxyde de zirconium stabilisé en partie et, pour la couche (10') céramique supérieure, de l'oxyde de zirconium stabilisé en partie.

12. Procédé suivant l'une ou plusieurs des revendications précédentes,
dans lequel on utilise de l'oxyde de zirconium pour les couches (7‴, 10') calorifuges céramiques,
et la partie monoclinique de la poudre à pulvériser est inférieure à 3 %,
et représente au moins 0,3 %.

13. Procédé suivant l'une ou les deux des revendications 11 ou 12,
dans lequel la proportion tétragonale dans l'oxyde de zirconium a la proportion la plus grande d'au moins 60 %.

14. Procédé suivant la revendication 12 ou 13,
dans lequel, par un traitement thermique, on réduit la proportion monoclinique de l'oxyde de zirconium en-dessous de la limite de détection.

15. Procédé suivant l'une ou plusieurs des revendications 2 à 14,
dans lequel on pulvérise la couche (7‴) inférieure sans polymère et on pulvérise la couche (10') supérieure avec du polymère.

16. Procédé suivant l'une ou plusieurs des revendications 2 à 15,
dans lequel le diamètre (d₁₀) de pore moyen de la couche (10') céramique supérieure est plus grand que le diamètre (d₇) de pore moyen de la couche (7‴) céramique inférieure, en particulier d'au moins 20 µm.

17. Procédé suivant l'une ou plusieurs des revendications 2 à 16,
dans lequel on utilise, pour les couches (7‴, 10') céramiques la même poudre ayant la même composition et la même répartition granulométrique.

18. Procédé suivant la revendication 2 à 16,
dans lequel on utilise, pour la couche (7‴) céramique inférieure, un autre matériau que pour la couche (10') céramique supérieure, en particulier de l'oxyde de zirconium pour la couche (7‴) inférieure, d'une manière tout à fait particulière, un pyrochlore pour la couche (10') supérieure.
